# EUROPEAN PATENT SPECIFICATION

(11) **EP 2 465 905 B1**
(45) Date of publication and mention of the grant of the patent: **22.02.2017**
(21) Application number: 11191848.8
(22) Date of filing: 05.12.2011
(51) Int. Cl.: C09D 5/16, C09D 7/00, C08J 7/04, C08J 7/06, C09K 3/18

(54) **Ice release systems comprising silicone and grease compositions**
Eisfreigabesysteme enthaltend Silicon- und Fettzusammensetzungen
Systèmes de détachement de glace comprenant des compositions de silicone et de graisse

(30) Priority: 20.12.2010 US 973621
(43) Date of publication of application: 20.06.2012
(73) Proprietor: General Electric Company, Schenectady, NY 12345 (US)
(72) Inventor: Richards, William David, Niskayuna, NY 12309 (US); Chuck, Timothy Leigh, Niskayuna, NY 12309 (US); Farrell, Sharon Dawn, Niskayuna, NY 12309 (US)
(74) Representative: Williams, Andrew Richard

(56) References cited:
- EP-A2- 1 046 430
- EP-A2- 1 734 090
- WO-A1-2010/103209
- US-A- 3 712 864
- US-A- 3 770 633
- NORA A ET AL: "METALLIC SOAPS", ULLMANN'S ENCYCLOPEDIA OF INDUSTRIAL CHEMISTRY, WILEY-VCH VERLAG GMBH & CO. KGAA, WEINHEIM, PAGE(S) 1 - 16 , 1 January 2005 (2005-01-01), XP002524032, ISBN: 978-3-527-31097-5 Retrieved from the Internet: URL:http://mrw.interscience.wiley.com/emrw /9783527306732/ueic/article/a16 _361/current/pdf [retrieved on 2001-09-15]

## Description

### FIELD OF THE INVENTION

The invention includes embodiments that relate to ice release systems. More particularly, the invention includes embodiments that relate to ice release articles with coated surfaces.

### BACKGROUND OF THE INVENTION

The accretion of ice onto surfaces of critical structures poses many problems with respect to efficiency of operation and safety. For example, accretion of ice in aircraft engines is a significant problem in the aviation industry. Atmospheric icing can affect the performance of fan blades, inlet guide vanes, fan exit guide vanes, etc. and in extreme cases can result in engine flameouts. Ice accretion on aircraft fuselages and wings also poses a hazard, affecting aerodynamic performance and safety. The problems are not limited to the aviation industry. Ice accumulation on wind turbine blades in cold climates can adversely affect operating efficiencies and can pose safety issues, sometimes requiring turbine shutdown.

Current methods for preventing ice accretion include application of liquid deicing agents, electrical or hot air heating of the critical components, or mechanical removal of the ice layer. Liquid deicing agents have a short period of effectiveness and pose environmental issues, and the thermal and mechanical solutions are expensive to implement. It would be desirable to have surfaces that are inherently resistant to the accretion of ice or that release ice upon the application of very low forces so that the size of the accreted ice mass is limited. Specialized ice phobic coatings are an attractive alternative.

A coatings approach presents a passive method for controlling ice accretion that may be integrated into existing structures and designs. Unlike de-icing fluids, these coatings are long lasting and are not environmentally hazardous. Furthermore, coatings do not increase the energy cost of the system, unlike wing/blade heating or pneumatic covering approaches. Despite over half a century's worth of targeted research and development, no existing coating technology has been both successfully commercialized and satisfactorily proven effective in the field. Thus, there is a need for durable, ice phobic coatings that can be applied to parts to prevent ice build up.

EP 1,734,090 A2 discloses erosion resistant anti-icing coatings for use on aircraft and gas turbine engine structures. US 3,770,633 discloses compositions for anti-icing and lubricating coatings. EP 1,046,430 A2 discloses a method for enhancing the properties of biofouling release coatings. WO 2010/103209 A1 discloses an aqueous formulation for an anti-fouling coating system.

### BRIEF SUMMARY OF THE INVENTION

The coatings of the present invention have been found to substantially reduce the adhesion strength of ice to the surface of coated parts.

In one embodiment, an article is provided comprising a cured silicone composition swellable network disposed on a surface of the article; and a grease absorbed in to the silicone composition, the grease having a fluid lubricant component and a thickener component; wherein the thickener component is a lithium soap, calcium soap, aluminum soap, lithium complex soap, calcium complex soap, aluminum complex soap, or polyurea.

In another embodiment, a method is provided. The method comprises providing an article with a silicone coating, wherein the silicone coating comprises a cured silicone composition swellable network, and wherein a grease is absorbed in to the silicone composition network to form a greased silicone surface;wherein the grease has a fluid lubricant component and a thickener component, wherein the thickener component is a lithium soap, calcium soap, aluminum soap, lithium complex soap, calcium complex soap, aluminum complex soap, or polyurea;exposing the greased silicone surface to an ice forming atmosphere, wherein the greased surface has an ice adhesion less than 21 kN/m2.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a plot with ice adhesion as a function of the amount of grease absorbed into a silicone coating after conditioning at room temperature and 40°C, according to one embodiment of the present invention.
FIG. 2 is a plot comparing the ice adhesion performance of a grease coated silicone substrate along with the uncoated silicone substrate, according to one embodiment of the present invention.
FIG. 3 is a bar chart comparing water stability of a grease coated silicone substrate to the uncoated silicone substrate, according to one embodiment of the present invention.
FIG. 4 is a bar chart comparing grit erosion stability of a grease coated silicone substrate to the uncoated silicone substrate, according to one embodiment of the present invention.

### DETAILED DESCRIPTION OF THE INVENTION

Disclosed herein are systems with a substrate and coatings with improved ice phobic properties. The combination of a two-component coating on a substrate reduces the strength of ice adhesion on system surfaces.

The term "ice phobic" is herein used to describe a coating that reduces the adhesion strength of ice to a surface e.g. reduces the shear force required to remove the ice. In certain embodiments, the system used herein is an aerodynamic article, including, but not limited to, the surface of aircraft components or wind turbine components. The surface can include the surface of structures, equipment and components or parts of equipment that encounter the environment, including moisture in air. Examples of components that can be protected by the disclosed coatings include, but are not limited to, aircraft engine components such as fan blades and air splitters as well as aircraft fuselages, aircraft wings, aircraft propeller blades, wind turbine blades, gas turbines and off-shore oil and gas structures.

One embodiment of the present invention is an article. The article can be any device that prefers an icephobic surface for its stability and /or efficient operation. Examples of the articles include, but not limited to, aircraft engine components such as fan blades and air splitters as well as aircraft fuselages, aircraft wings, aircraft propeller blades, a wind turbine blade, a propeller, a jet engine component, a landing gear, gas turbines and off-shore oil and gas structures. Generally some surfaces of the articles get exposed to ice forming conditions and are vulnerable to ice build-up. The surface of the article may be any metal, ceramic, polymer, glass, or a composite material. In one embodiment, the surface of the article is a metal or alloy. In a further embodiment the surface comprises aluminum. In a still further embodiment the surface comprises a composite. In another embodiment, the surface is a coated metal such as, for example, a rubber coated aluminum.

A coating or cover of materials that are less or non-adherent to the ice is desired to decrease the ice adhesion to the surface of the articles. Silicone (polyorganosiloxane) is one such material that can be applied to decrease the ice adhesion to the surface of the article. The silicone coatings can be expected to give erosion resistance and debri formation resistance properties to the applied article surface along with the ice phobic nature. Accordingly, a surface of the article requiring ice phobic property is coated with a silicone composition. In one embodiment, the silicone composition is a part of a room temperature vulcanizable polymer and is cross linked at the surface of the article. However, in some cases, the article surfaces that are coated with the silicones still tend to be vulnerable for ice formation to certain extent. The ice formation of the article surface coated with the silicone may be less than the uncoated article surface, but a further reduction in ice adhesion on the article surface is desirable.

Inventors of the present application applied a grease to the surface of the silicone coated article and observed a lower ice adhesion on the article surface compared to the silicone coated article surface. In some embodiments, the ice adhesion of an article surface coated with silicone and grease is about 2 to 10 times lower than that of silicone coated article surfaces.

As used herein, grease is a semi-fluid to solid mixture of a fluid lubricant and a thickener, with optional additives. In one embodiment, the fluid lubricant is responsible for the lubrication and the thickener gives consistency to the grease. Grease's consistency is its resistance to deformation by an applied force. Grease formulations will vary in composition, molecular weight of the fluid lubricant and the type and amount of thickener. All of these variables affect the performance of the greases with respect to icing. The composition and molecular weight of the fluid lubricant affects the amount of grease uptake into the substrate and the temperature range for use.

The fluid lubricant may be a petroleum (also called mineral) oil, synthetic oil, or vegetable oil and may comprise hydrocarbons or esters, according to one embodiment. The mineral and synthetic oils may be either naphthenic oils or paraffinic oils. Naphthenic oils comprise a high proportion of cyclic hydrocarbon fraction compared to paraffinic oils. In one embodiment, the mineral oil used as the fluid lubricant of grease is naphthenic oil. Vegetable oils are liquid fats derived from the plants or plant products. The hydrocarbons and / or esters of the synthetic oils may be synthetically generated, compared to the naturally occurring hydrocarbons / esters in the mineral and vegetable oils. In general, synthetic oils are comparatively effective in high-temperature and low temperature extremes of their operating temperature ranges compared to the mineral and vegetable oils. Synthetic oils in general comprise synthetic hydrocarbons, synthetic esters, polyglycols, silicones, halocarbons, fluoroethers, or polyphenylethers. In one embodiment, polyolefins are the fluid lubricants of the greases used in this application. Polyalphaolefins have a complex branched structure with an olefin bond in the alpha position of one of the branches. Hydrogenated polyalphaolefins have olefin-carbons saturated with hydrogen, which lends excellent thermal stability to the molecule. Examples of hydrogenated polyalphaolefins include hydrogenated decene homopolymer.

The thickeners can be soap thickeners or non-soap thickeners. In one embodiment, the thickeners used in this application are soap thickeners comprising a salt of a fatty acid, including aluminum, calcium, lithium, and sodium salts of long carbon-chain fatty acids. Soap concentration can be varied along with the viscosity of fluid lubricant to obtain different grease thicknesses. A petroleum jelly has a molecular weight that is high enough not to be free flowing oil but low enough not to be a solid. Petroleum jelly does not contain a separate thickener, and is not a grease as defined herein.

A "complex soap" is a composition including a complexing agent consisting of a salt of a short-chain organic or inorganic acid in addition to the soap. Acetic acid and lactic acid are common examples of organic acids, and common inorganic acids are carbonates or chlorides.

A lithium grease may contain lithium 12-hydroxystearate. Lithium complex grease is similar to lithium soap grease except that it includes a complexing agent. Calcium complex grease may contain calcium acetate. Aluminum grease contains an aluminum salt of a fatty acid. A specific example of an aluminum grease thickener is an aluminum hydroxide benzoate stearate.

Thickeners other than soaps are available to make greases. One example of a non-soap thickener is polyurea.

Polyurea is an organic non-soap thickener. It is a low-molecular-weight organic polymer produced by reacting amines with isocyanates. A polyurea complex grease contains a complexing agent, most commonly calcium acetate or calcium phosphate, in addition to the polymer.

In one embodiment, the fluid lubricant is a hydrocarbon and the thickener component is a lithium complex soap. In another embodiment, the fluid lubricant is hydrogenated decene homopolymer and the thickener component is an aluminum hydroxide benzoate stearate.

Normally additives in the grease are used to enhance performance and protect the grease and lubricated surfaces. Additives may provide elevated pressure performance, oxidative stability, and/or rust resistance. Additives such as solid lubricants, rust inhibitors, and stabilizers may be used as minor components. Examples of solid lubricants include PTFE and molybdenum disulphide.

The structure of greased silicone may vary based on type of silicone used, type of grease, respective amounts of silicone and grease and the treatments obtained by the greased silicone during their processing or during their usage. In one embodiment, the cured silicone has a swellable network and grease is absorbed into the network of the silicone. In one embodiment, grease is present mostly on a weatherable surface of the greased silicone and in another embodiment; the grease is absorbed into the silicone as well as on the surface. Excess grease on the weatherable surface may attract dust and erosion particles to stick to the surface. Therefore, in one embodiment, the surface of the greased silicone is wiped off to remove any excess applied grease that is not absorbed into the silicone coating.

The highly viscous nature of the grease normally keeps the grease within the crosslinked silicone matrix such that the surface remains dry. However, under some conditions, the grease or components of the grease may separate from the silicone over time resulting in an oily coating on top of the silicone surface. This sweating or weeping is undesirable in that the oil may trap dirt and debri on the surface, the oily substance may be transferred to other surfaces where it is not desirable, and it ultimately leads to the loss of grease components from the coating. The tendency of the silicone/grease coating to sweat is dependent on the composition of the grease. Greases that contain low viscosity oils and are formulated to be more fluid are apt to sweat. Oils and other lubricating substances applied to the surface that are not formulated as a grease will almost certainly sweat because by themselves they do not have sufficient viscosity to keep them from flowing out of the coating. Proper selection of the grease formulation is key to prevent undesirable sweating while at the same time obtaining sufficient grease concentration in the coating to impart the desired icephobicity to the surface.

The silicone and grease coatings can be applied by any method known to those skilled in the art. For example, the silicone may be applied by spraying, roll coating, brush painting, doctor blading, dip or flow coating or overmolding in one or more steps. In one embodiment, the silicone is disposed on a surface, cured and then the grease composition is applied to the cured silicone composition forming a greased silicone. In a further embodiment, applying fully formulated grease is preferred to applying the individual components of the grease separately, in order to adventitiously use the structure of the formulated grease to prevent loss of the fluid lubricant. In one embodiment, grease is applied to the cured silicone and subjected to a thermal treatment in the compatible temperature range and time to make the greased silicone. The temperature and time of thermal treatment may vary with the type of silicone, type of grease used and the intended application of the greased silicone. In one embodiment, the thermal treatment helps the silicone to absorb grease more rapidly. In one embodiment, the amount of grease in the greased silicone is associated with the ice phobic nature of the article surface applied with the greased silicone. In one embodiment, the amount of grease in the greased silicone is at least about 2 Wt% based on weight of the silicone composition. In a further embodiment, the amount of grease in the greased silicone is at least about 8 Wt% based on weight of the silicone composition.

Methods of forming a greased silicone surface of an article may vary depending on function of the article surface, condition of the article surface, weather, and ease and effectiveness of the process of forming greased silicone surface. In one embodiment, an article surface is coated with a silicone, the silicone is cured on the surface and then the grease is applied to the cured silicone surface. In another embodiment, a cured silicone sheet is infused with grease in a separate step prior to attaching it to the article surface. In a further embodiment, the silicone and grease coatings are sequentially applied on a temporary surface for the formation of the greased surface. In the instance of forming a greased silicone on a temporary surface, the temporary surface is chosen to be a less adherent surface for the silicone or greased silicone coating such that removing the greased silicone from the temporary surface does not damage the ice phobic or erosion resistant property of the greased silicone. The greased silicone can then be permanently attached to another surface to impart icephobicity.

The greased silicone can be attached to the article surface in different methods known to those skilled in the art. In one embodiment, the greased silicone is applied to the article surface by providing a layer of uncured silicone coating on the article surface and attaching the greased silicone to the surface before curing the in-between silicone layer. In another embodiment, a separate, high temperature stable adhesive is added to attach the greased silicone to the article surface. In one embodiment, the greased silicone is directly attached to the article surface by the use of temperature, pressure, and /or any chemical bonding agent.

The articles coated with greased silicone may be used in different applications. Examples of the articles include an aircraft wing, a wind turbine blade, a propeller, a jet engine component, an aircraft fuselage, and a landing gear. The greased silicone may be coated on the article surface using any of the methods described above and their obvious variations. The greased silicone coated articles may be exposed to any ice forming atmosphere during testing and operation. In one embodiment, the greased surface has an ice adhesion less than about 21 kN/m². In a further embodiment, the greased silicone surface has an ice adhesion less than about 14 kN/m². In a still further embodiment, the greased silicone surface has an ice adhesion less than about 7 kN/m².

### EXAMPLES

The following examples illustrate methods, materials and results, in accordance with specific embodiments, and as such should not be construed as imposing limitations upon the claims. All components are commercially available from common chemical suppliers.

Efforts for developing icephobic surfaces were started with the use of several commonly used chemicals such as polyalkylene glycols, as coatings on crosslinked silicones. Surfaces of the cross-linked silicone after coating were normally evaluated based on the weight gain, changes in hardness, and ice adhesion performance following exposure. Aeroshell® 33MS grease and Aeroshell® 22 grease obtained from Shell Aviation and Aerospec® 100 grease obtained from Rocol are some of the early chemicals experimented for the coating on silicone over a substrate. Unexpectedly, silicones with these coatings showed significantly reduced ice adhesion compared to cross-linked silicone coated substrates.

Aeroshell^{®} 33MS grease is a synthetic hydrocarbon/ester oil thickened with a lithium complex and contains about 5Wt% molybdenum disulfide. Aeroshell^{®} 22 grease normally comprises a synthetic oil base and a non-melting inorganic thickener. Rocol Aerospec® 100 grease has synthetic oil and a lithium soap thickener.

Different cross-linked silicone substrates were used such as:
LIM®6030 - a heat-cured, liquid injection moldable silicone sold by Momentive Performance Materials, injection molded to a sheet with a nominal Shore A Durometer hardness of 30.
LIM®6050 - a heat-cured, liquid injection moldable silicone sold by Momentive Performance Materials, injection molded to a sheet with a nominal Shore A Durometer hardness of 50.
LIM®6071 - a heat-cured, liquid injection moldable silicone sold by Momentive Performance Materials, injection molded to a sheet with a nominal Shore A Durometer hardness of 70.
AK9* on chloroprene rubber - a low modulus, lightly filled silicone coating supplied by AS&M.
AK12XS on chloroprene rubber - a low modulus, moderately filled silicone coating supplied by AS&M.
AK21XS on chloroprene rubber - a intermediate modulus, more highly filled silicone coating supplied by AS&M.

These substrates were coated with the above-mentioned greases and exposed to about 40°C temperature for about 7 days. Before testing, the coated surface was wiped off to remove residual grease. The ice adhesion testing was performed using an indigenously developed icing chamber. The test consists of accreting ice onto a 6.45 cm² (1 inch²⁾ portion of a sample coupon, and subsequently measuring the shear force required to dislodge the ice. The weight gain and ice adhesion results for the above experiments were as shown in Table 1 below. In this test, aluminum was used as the sample coupon for the LIM samples and chloroprene rubber coated aluminum was used as the sample for AK9*, AK12XS and AK21XS.

**Table 1**

| | **LIM** | | | **Coatings on Chloroprene Rubber (on Al)** | | |
|---|---|---|---|---|---|---|
| | **6030** | **6050** | **6071** | **AK9*** | **AK12XS** | **AK21XS** |
| **7 Day Weight Gain (%)** | | | | | | |
| Aeroshell 22 Grease | 4.6 | 4.8 | 4.6 | 0.7 | 0.2 | 0.0 |
| Aeroshell 33 MS Grease | 14 | 14 | 12 | 7.9 | 7.3 | 7.2 |
| Rocol Aerospec 100 Grease | 8.0 | 8.3 | 7.8 | 68 | 75 | 67 |
| | | | | | | |

| **Ice Adhesion, kPa (psi)** | | | | | | |
|---|---|---|---|---|---|---|
| No Exposure | 54 (7.8) | 54 (7.8) | 69 (10) | 51(7.4) | 60 (8.7) | 97 (14) |
| Aeroshell 22 Grease | 29 (4.2) | 24 (3.5) | 21 (3.0) | 25 (3.6) | 28 (4.1) | 28 (4.1) |
| Aeroshell 33 MS Grease | 17 (2.4) | 12 (1.7) | 11 (1.6) | 14 (2.0) | 21 (3.1) | 15 (2.2) |
| Rocol Aerospec 100 Grease | 16 (2.3) | 12 (1.7) | 15 (2.2) | Rubber Delaminated | Rubber Delaminated | Rubber Delaminated |

| | | | | | | |
|---|---|---|---|---|---|---|
| Note: The weight gains for the coatings on the rubber were relative to the weight of the coating plus rubber plus aluminum backing, and thus should be considered only in relative terms. | | | | | | |

All three greases were found to be effective in reducing the ice adhesion relative to untreated surfaces. However, the surfaces treated with the Aeroshell® 22 grease and the Rocol Aerospec® 100 grease were both observed to sweat after being wiped down, and the Rocol Aerospec® 100 grease compromised the adhesion of the coatings. The Aeroshell® 33MS grease was found to be unique in that it exhibited the greatest weight gain, left a dry, non-oily, non-sweating surface following the initial wipe down and provided the best ice adhesion performance of the three greases studied. For the above reasons, the Aeroshell® 33MS grease was subjected to further study.

As can be seen from Table 1, reductions in ice adhesion by a factor of 3 to 5 were observed when the silicone surfaces were applied with the Aeroshell 33MS grease. The benchmark material for ice adhesion is AK9* with a value of 51kPa (7.4 psi). AK9* is considered to be a viable coating for applications requiring low ice adhesion. The Aeroshell® 33MS treatment provides a further reduction in ice adhesion by more than a factor of 3 for a variety of silicone substrates, which is a substantial and surprising improvement.

Based on the above promising results, further evaluation of the Aeroshell® 33MS grease coating was conducted on an aluminum substrate along with different silicones and compared with an ungreased silicone coated aluminum substrate.

Substrates used were aluminum coupons coated with AK12XS, LIM® 6050 silicones, and a silicone sheet from McMaster-Carr. The silicone sheet from McMaster-Carr is an adhesive backed silicone sheet of about 0.79mm (1/32") thickness (Part Number: 86465K34). The treatment of these coatings consisted of spreading an excess amount of the Aeroshell® 33MS grease onto the surface, holding the treated coupons in about 40°C temperature oven for 3 days, and wiping off the excess grease at room temperature upon removal. Average results and standard deviations (SD) for three measurements are as shown in Table 2 below.

**Table 2**

| Silicone Coating | Ice Adhesion, kPa (psi) | | | |
|---|---|---|---|---|
| | Untreated | | Treated | |
| | Average | SD | Average | SD |
| AK12 XS | 86 (12.5) | 10 (1.5) | 17 (2.5) | 1 (0.2) |
| Silicone Sheet from McMaster Carr | 68 (9.9) | 24 (3.5) | 12 (1.7) | 2 (0.3) |
| LIM 6050 | 60 (8.7) | 12 (1.8) | 11 (1.6) | 2 (0.3) |

The results in Table 2 demonstrate that substantial reductions in ice adhesion are achievable for a variety of cross-linked silicone coatings when treated with Aeroshell® 33MS grease. For all three coatings the application of the grease reduced the ice adhesion by a factor of about 5 or more.

As stated previously, the Aeroshell® 33MS grease contains molybdenum disulfide. This grease was compared with Aeroshell® 33, which is a grease with substantially same composition, but without the molybdenum disulfide additive. Comparison of the ice adhesion performance of these two greases is shown in Table 3.

**Table 3**

| Surface/Grease | Ice Adhesion, kPa (psi) | |
|---|---|---|
| | Average | SD |
| LIM 6050 w Aeroshell 33MS | 11 (1.6) | 2 (0.3) |
| LIM 6050 w Aeroshell 33 | 9 (1.3) | 1 (0.1) |

The results show that ice adhesion performance of Aeroshell® 33 grease and Aeroshell® 33MS grease are similar. Aeroshell® 33 also did not sweat at room temperature and exhibited similar non-oily surface appearance as the Aeroshell® 33MS grease.

Table 4 shows the ice adhesion results for three successive tests on two different aluminum substrate coupons, both treated with the Aeroshell® 33 grease. Neither coupon shows any deterioration of performance with repetitive exposure to ice.

**Table 4**

| LIM 6050 w Aeroshell 33 | |
|---|---|
| Coupon No. | Ice Adhesion, N (lbs_{f}) |
| 1 | 5.8 (1.3) |
| 1 | 6.7 (1.5) |
| 1 | 5.8 (1.3) |
| 2 | 5.8 (1.3) |
| 2 | 5.3 (1.2) |
| 2 | 5.3 (1.2) |

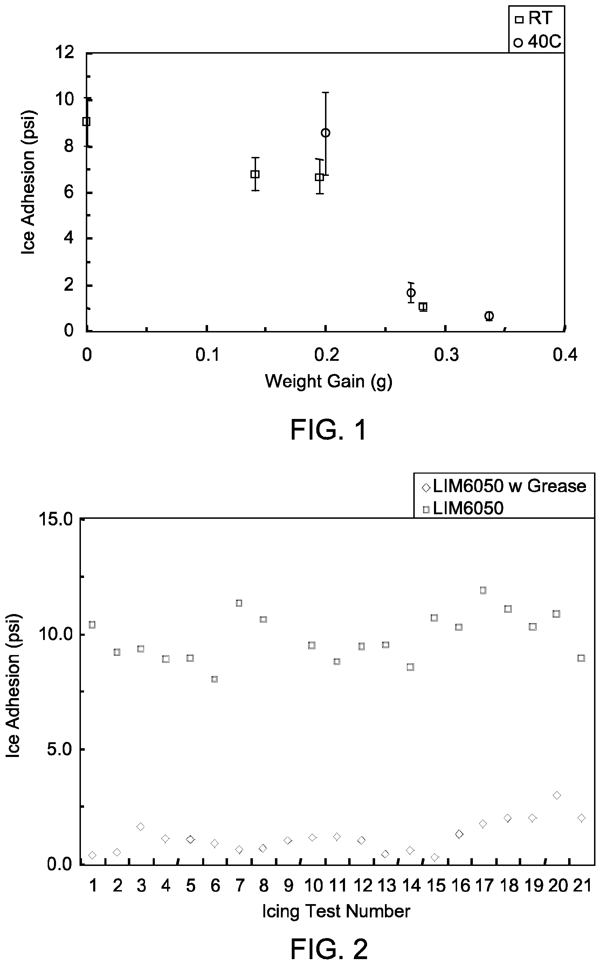

The effect of treatment time and temperature on weight gain and ice adhesion performance was evaluated for Aeroshell® 33 grease coated silicones on aluminum coupons. The coupons were subsequently conditioned at either room temperature or 40°C for times ranging from 8 to 48 hrs. The results are summarized in Table 5 and are plotted in Fig. 1. The results are the average and standard deviation values obtained for 2 coupons each tested twice for ice adhesion.

**Table 5**

| | Time (hrs) | | | |
|---|---|---|---|---|
| | Control | 8 | 16 | 48 |
| **Room Temperature Conditioning** | | | | |
| Wt Gain (g) | 0.00 | 0.141 | 0.195 | 0.282 |
| Ice Adhesion - Ave, kPa (psi) | 62 (9.0) | 47 (6.8) | 46 (6.7) | 8 (1.1) |
| Ice Adhesion - SD, kPa (psi) | 7 (1.0) | 5 (0.7) | 6 (0.8) | 1 (0.2) |

| **40C Conditioning** | | | | |
|---|---|---|---|---|
| Wt Gain (g) | | 0.200 | 0.272 | 0.337 |
| Ice Adhesion - Ave, kPa (psi) | | 59 (8.5) | 12 (1.7) | 4 (0.62) |
| Ice Adhesion - SD, kPa (psi) | | 12 (1.8) | 3 (0.4) | 1 (0.16) |

| | | | | |
|---|---|---|---|---|
| Note: The weight gains listed are the increases in weight obtained on a coupon consisting of adhered to an aluminum substrate after the exposure conditions listed and after wiping off excess grease from the surface. | | | | |

These results show that there is a minimum amount of grease that needs to be absorbed into the cross-linked silicone before significant beneficial performance is observed for ice adhesion. For the grease samples described above, the minimum amount of grease is about 0.25 g, which is approximately an 8% weight gain by the silicone coating. Once the minimum weight gain is achieved, almost an order of magnitude reduction in ice adhesion was observed.

In the plot shown in Fig. 2, effect of repetitive icing exposures on the ice phobic behavior of the greased LIM6050 relative to that for the ungreased LIM6050 coating is shown. It is apparent that after 21 icing tests only a small increase in ice adhesion occurs for the LIM6050 coated with grease, and that there remains a factor if 4 reduction in ice adhesion relative to LIM6050 with no grease treatment. The grease-treating coating retains its low ice adhesion performance even after many icing events.

A second test was used to evaluate the effectiveness of the Aeroshell® 33MS grease in reducing ice adhesion. This test utilized a fan located inside a refrigerated room cooled to -15°C. An ice cube of uniform size and shape was frozen onto a coated aluminum coupon, and then the coupon was attached onto a fan blade at a location of 381mm (15 inch) from the center. The fan speed was incrementally increased until the centrifugal force was sufficient to detach the ice cube. The force required to remove the ice cube was calculated from the fan speed at detachment, the mass of the ice and the radial location of the cube. The results from this test are shown in Table 6. The removal force reported is the average of two tests on the same coupon.

**Table 6**

| Sample | Average | St. Dev. |
|---|---|---|
| | Cg, N (lbf) | Cg, N (lbf) |
| AK-21 on Chloroprene Rubber | 22 (5.0) | 5 (1.1) |
| AK-21 on Aluminium | 37 (8.3) | 0.4 (0.1) |
| AK-21 with Aeroshell 33MS & Grease | 6 (1.4) | 5 (1.1) |
| AK-9* on Chloroprene Rubber | 12 (2.6) | 0.9 (0.2) |
| LIM 6050 | 18 (4.1) | 0.9 (0.2) |
| LIM 6050 with Aeroshell 33MS & Grease | 3 (0.6) | 0.4 (0.1) |
| LIM 6071 with Aeroshell 33MS & Grease | 6 (1.3) | 1.8 (0.4) |

The results show that the best performance in this test was achieved with the coupons treated with the Aeroshell 33MS grease. In the cases where both treated and untreated coupons having the same silicone coating were tested, the reductions in ice adhesion for the untreated coupons were observed to be greater than a factor of 5.

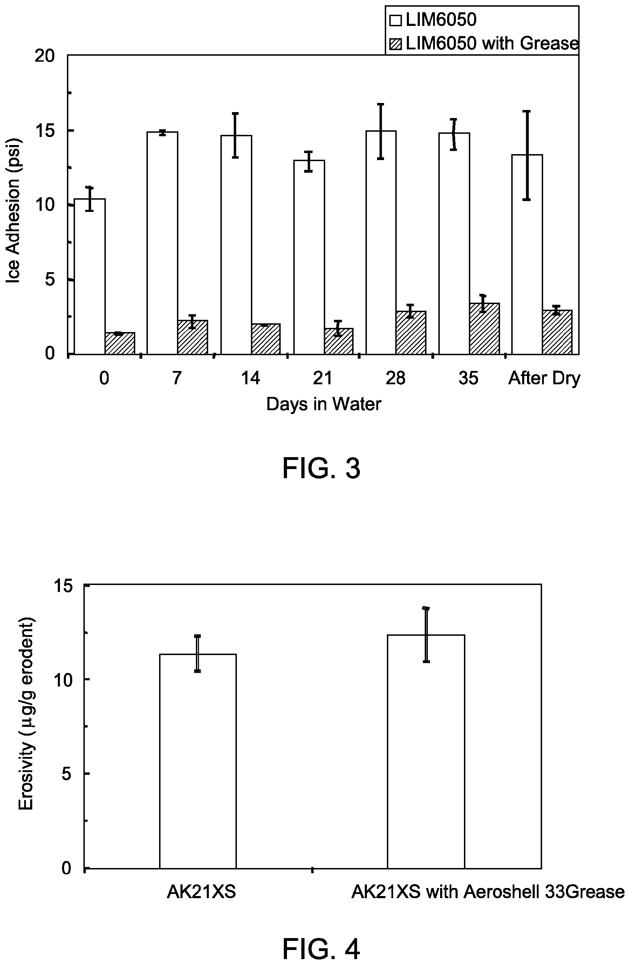

In a test, effect of long-term exposure to water on the ice adhesion performance of the LIM6050 treated with grease was evaluated. Ice adhesion coupons were immersed in room temperature water for 5 weeks. At the end of each week the coupons were removed, dried overnight and then evaluated for ice adhesion. After the fifth week test, the coupons were thoroughly dried in a vacuum oven and retested. The results depicted in Fig. 3 show that there is a small increase in the ice adhesion for both the LIM6050 control and the LIM6050 treated with grease after the first week of water soak. However, after each week interval the ice adhesion of the LIM6050 remains more than a factor of four lower than that of the control, and after five weeks of water immersion there is only a small increase in ice adhesion observed. The grease-treated surface retains low ice adhesion even after extended exposure to water.

A test was used to evaluate the resistance of the silicone infused with Aeroshell® 33 grease to grit erosion. The plot in Fig. 4 shows a comparison of the wear by grit erosion for an AK21XS icephobic coating and the same coating treated with Aeroshell® 33 grease. The test consists of firing 300 g of grit from a nozzle over 43 s at an impingement angle of 20° onto the surface containing the icephobic coating and subsequently measuring the resulting loss of weight. The plot shows that the addition of the grease to the coating has no statistically significant affect on grit erosion.

In addition to the Aeroshell 33MS and Aeroshell 33 greases, several other commercial greases having different compositions have also been evaluated. These greases are listed in the Table 7 below along with the information provided by the vendors related to their composition and recommended temperature range for use. The NLGI (National Lubricating Grease Institute) is a numeric rating of the consistency of the grease with a low value being more fluid and a higher value being more solid-like.

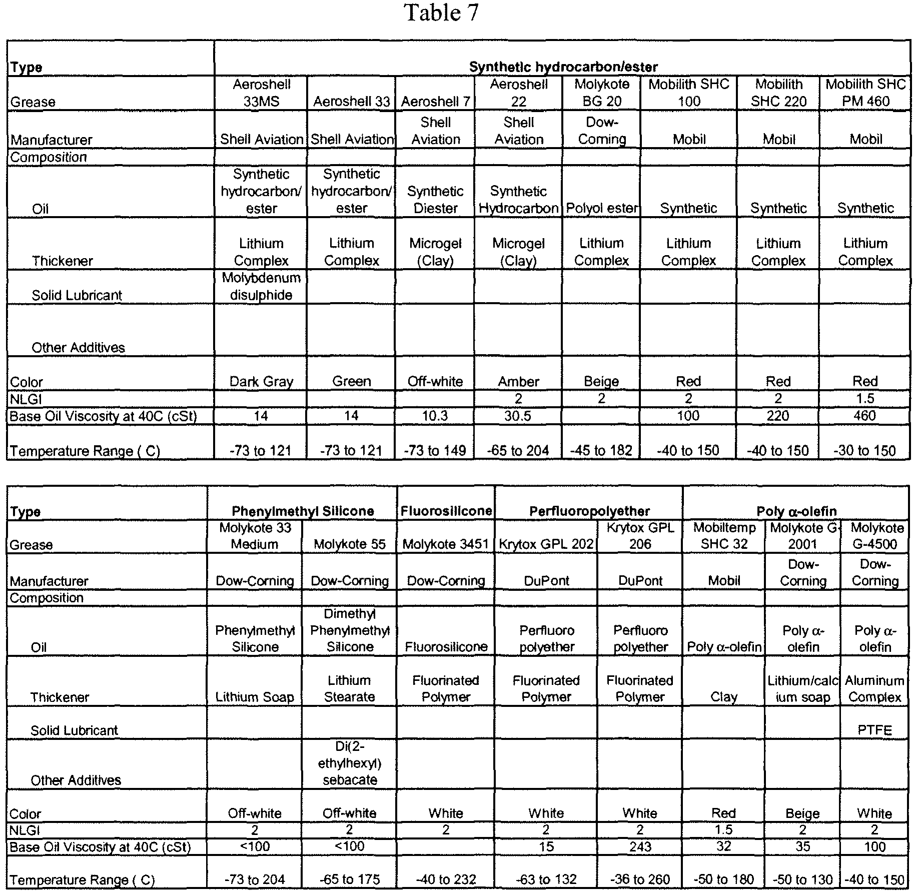

Coupons containing Aeroshell 7, Aeroshell 22, Molykote 3451, Krytox GPL 202, Krytox GPL 206 and Mobiltemp SHC32 as grease are reference coupons.

| **Type** | **Mineral Oil** | | | | |
|---|---|---|---|---|---|
| Grease | Molykote G-0010 | Molykote G-0051FG | Mobilgrease XHP 222 | Aeroshell 14 | Teflon Severe |
| Manufacturer | Dow-Coming | Dow-Coming | Mobil | Shell Aviation | DuPont |
| Composition | | | | | |
| Oil | Mineral Oil | Mineral Oil | Mineral Oil | Mineral Oil | Mineral Oil |
| Thickener | Polyurea | Aluminum Complex | Lithium Complex | Calcium Soap | Calcium Sulfonate |
| Solid Lubricant | | Yes | | | PTFE |
| Other Additives | Corrosion Inhibitor | Yes | Corrosion Inhibitor | | |
| Color | Green | White | Blue | Tan | Red |
| NLGI | 2 | 1 | 2 | | |
| Base Oil Viscosity at 40C (cSt) | 125 | 70 | 220 | 12.5 | |
| Temperature Range (C) | -30 to 170 | -17 to 150 | ? To 140C | -54 to 93 | -40 to 177 |

These greases were all applied to LIM6050 coupons using the same procedure that has been used for the Aeroshell 33 grease; an excess amount of grease was spread onto the surface of the LIM6050, the greased coupon was then held at 40° C in an oven for 48 hrs, and after cooling to room temperature the excess grease was removed with a dry tissue. The weight uptake into LIM6050 ice coupons and the results of the icing tests for each of the greases mentioned in Table 7 along with that of the LIM6050 control are provided in the Table 8. The weight of the LIM6050 used on the ice coupons was approximately 3 g.

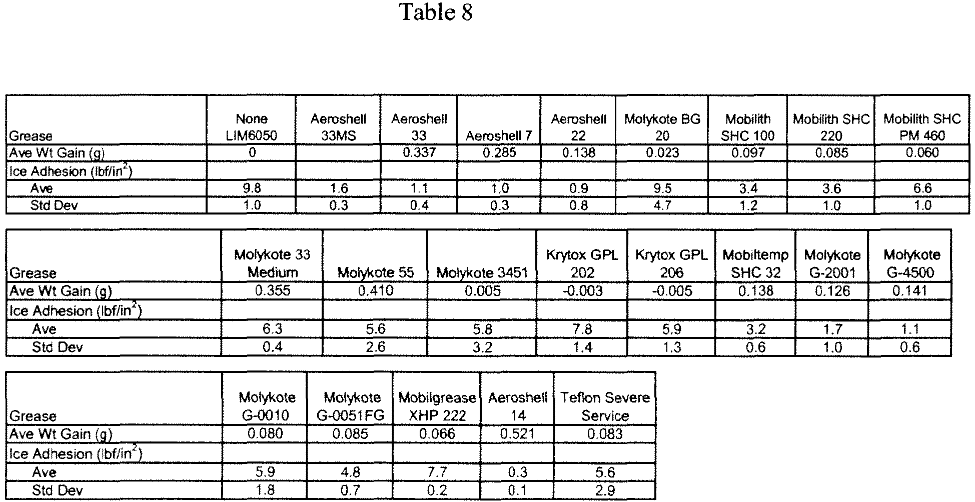

With the exception of Molykote BG 20, all of the greases provide some reduction in ice adhesion relative to LIM6050 when applied to its surface. The degrees to which the ice adhesion values are reduced for the Molykote 55, Mobilith SHC PM 460, Molykote® 33 Medium, Molykote® 3451, Krytox® GPL 202, Krytox® GPL 206, Molykote® G-0010, Molykote® G-0051FG, Mobilgrease XHP 222 and Teflon Severe Service are all modest - generally by a factor of 2 or less. This relatively small improvement is not surprising given that most of these greases are absorbed into the LIM6050 at low levels compared to the Aeroshell® 33. At low levels of absorption, even the Aeroshell grease is not highly effective in reducing ice adhesion as explained earlier. The exceptions are Molykote 33 Medium and Molykote 55, both of which were absorbed to a greater extent than the Aeroshell 33 grease, but do not produce similarly large reductions in ice adhesion. Both of these greases contain phenylmethyl silicone oils, which may be readily absorbed into the cross-linked silicone matrix but do not provide an effective ice release composition.

Mobilith SHC 220 grease, which appears to be similar in composition to Aeroshell 33, achieves close to a factor of 3 reduction in ice adhesion despite being absorbed into the LIM6050 at a level which is only ¼ that of Aeroshell 33. When Aeroshell 33 is absorbed into LIM6050 at this same low level, almost no reduction in ice adhesion was observed.

The lowest ice adhesions values were obtained with the Aeroshell 7, Aeroshell 22, Molykote G-2001, Molykote G-4500 and Aeroshell 14 greases. These greases provided similarly low values of ice adhesion as the Aeroshell 33 grease. Like the LIM6050/Aeroshell 33 grease system, the surfaces of these other LIM6050/grease combinations do not have an oily appearance or feel nor do they sweat over time. The Molykote G-4500 differs from the Aeroshell 33 grease in both its oil and thickener chemistry, the latter being an aluminum soap complex as opposed to the lithium soap complex in the Aeroshell 33. The Aeroshell 14 has a calcium soap thickener, and the Aeroshell 7 and Aeroshell 22 greases contain a clay thickener. The low values of ice adhesion achieved with all these greases illustrate that a variety of types of oils and thickeners can be used in the grease provided that the thickener is of sufficient concentration and effectiveness to impart the desired consistency to the grease to prevent sweating of the silicone surface, the quantity of grease absorbed into the silicone is adequate to be effective, and the composition of the oil in the grease is imparts low adhesion to ice.

The similar test was also conducted by using petroleum jelly on a LIM6050 sample. The average weight gain obtained was about 0.106 gram and the ice adhesion average was about 11.7 with a standard deviation of about 2.1. The ice adhesion performance of petroleum jelly does not compare with any of the greases studied in this application despite the fact that it has lubricating properties, and is not a good material to use to achieve ice phobic surfaces.

A test was conducted to find out the effect of method of forming the article with the greased silicone surface. Three samples were prepared as described below: One article sample is an aluminum coupon coated with LIM6050, Second sample was prepared by coating aluminum coupon with greased LIM6050. Here, LIM6050 was first applied on the surface of aluminum coupon, Aeroshell 33 grease was applied over the LIM6050 and conditioned at 40°C. The third sample was prepared by first preparing a greased silicone sheet and then attaching the greased silicone to the aluminum coupon. Here, Aeroshell 33 grease was first applied over the LIM6050 and conditioned at 40°C and then the LIM6050 infused with Aeroshell 33 grease was glued to the aluminum coupon. Table 9 provides the results of this experiment, which suggests that the variation in the methods as described above does not decrease the ice adhesion performance of the article surfaces.

**Table 9**

| Ungreased LIM6050 | | | LIM6050 with Aeroshell 33 Grease | | | LIM6050 with Aeroshell 33 Grease | |
|---|---|---|---|---|---|---|---|
| | | | 6050 adhered to aluminum substrate prior to application of Grease | | | Grease pre-applied to 6050 and then glued to coupon | |
| Coupon No. | Adhesion (lbs_{f}) | | Coupon No. | Adhesion (lbs_{f}) | | Coupon No. | Adhesion (lbs_{f}) |
| 1 | 7.57 | | 1 | 1.29 | | 1 | 1.16 |
| 1 | 9.33 | | 1 | 1.53 | | 1 | 0.79 |
| 1 | 7.16 | | 1 | 1.26 | | | |
| 2 | 12.08 | | 2 | 1.34 | | 2 | 0.27 |
| 2 | 8.45 | | 2 | 1.20 | | 2 | 2.70 |
| 2 | 7.90 | | 2 | 1.24 | | | |
| **Average** | **8.7** | | | **1.3** | | | **1.2** |
| **Std Dev** | **1.8** | | | **0.1** | | | **1.0** |

While only certain features of the invention have been illustrated and described herein, many modifications and changes will occur to those skilled in the art.

## Claims

1. An article comprising:
a cured silicone composition swellable network disposed on a surface of the article; and
a grease absorbed in to the silicone composition, the grease having a fluid lubricant component and a thickener component; wherein the thickener component is a lithium soap, calcium soap, aluminum soap, lithium complex soap, calcium complex soap, aluminum complex soap, or polyurea.

2. The article of claim 1, wherein the fluid lubricant is a hydrocarbon or ester.

3. The article of claim 1, wherein the thickener component is an aluminum hydroxide benzoate stearate.

4. The article of any preceding claim, wherein the amount of grease is at least 2 Wt% based on weight of the silicone composition.

5. The article of claim 1, wherein the fluid lubricant is a hydrocarbon and the thickener component is a lithium complex soap.

6. The article of claim 1, wherein the fluid lubricant is hydrogenated decene homopolymer and the thickener component is an aluminum hydroxide benzoate stearate.

7. A method comprising:
providing an article with a silicone coating, wherein the silicone coating comprises a cured silicone composition swellable network, and wherein a grease is absorbed in to the silicone composition network to form a greased silicone surface;
wherein the grease has a fluid lubricant component and a thickener component, wherein the thickener component is a lithium soap, calcium soap, aluminum soap, lithium complex soap, calcium complex soap, aluminum complex soap, or polyurea;
exposing the greased silicone surface to an ice forming atmosphere, wherein the greased surface has an ice adhesion less than 21 kN/m².

8. The method of claim 7, wherein the greased surface has an ice adhesion less than 14 kN/m2.

9. An article prepared by the method of either of claim 7 or 8.

## Patentansprüche

1. Gegenstand, umfassend:
ein quellbares Netzwerk mit gehärteter Silikonzusammensetzung, das auf einer Oberfläche des Gegenstands angeordnet ist; und
ein Schmierfett, das in die Silikonzusammensetzung absorbiert wird, wobei das Schmierfett eine fluide Schmiermittelkomponente und eine Verdickerkomponente aufweist; wobei die Verdickerkomponente eine Lithiumseife, Calciumseife, Calciumkomplexseife, Aluminiumkomplexseife oder Polyharnstoff ist.

2. Gegenstand nach Anspruch 1, wobei das fluide Schmiermittel ein Kohlenwasserstoff oder Ester ist.

3. Gegenstand nach Anspruch 1, wobei die Verdickerkomponente ein Aluminiumhydroxidbenzoat-Stearat ist.

4. Gegenstand nach einem der vorhergehenden Ansprüche, wobei die Menge an Schmierfett ausgehend von dem Gewicht der Silikonzusammensetzung mindestens 2 Wt% beträgt.

5. Gegenstand nach Anspruch 1, wobei das fluide Schmiermittel ein Kohlenwasserstoff ist und die Verdickerkomponente eine Lithiumkomplexseife ist.

6. Gegenstand nach Anspruch 1, wobei das fluide Schmiermittel ein hydriertes Decenhomopolymer ist und die Verdickerkomponente ein Aluminiumhydroxidbenzoat-Stearat ist.

7. Verfahren, umfassend:
Bereitstellen eines Gegenstands mit einer Silikonbeschichtung, wobei die Silikonbeschichtung ein quellbares Netzwerk mit gehärteter Silikonzusammensetzung umfasst, und wobei ein Schmierfett in das Netzwerk mit Silikonzusammensetzung absorbiert wird, um eine gefettete Silikonoberfläche zu bilden;
wobei das Schmierfett eine fluide Schmiermittelkomponente und eine Verdickerkomponente aufweist, wobei die Verdickerkomponente eine Lithiumseife, Calciumseife, Aluminiumseife, Lithiumkomplexseife, Calciumkomplexseife, Aluminiumkomplexseife oder Polyharnstoff ist;
Aussetzen der gefetteten Silikonoberfläche einer eisbildenden Atmosphäre, wobei die gefettete Oberfläche eine Eishaftung von weniger als 21 kN/m² aufweist.

8. Verfahren nach Anspruch 7, wobei die gefettete Oberfläche eine Eishaftung von weniger als 14 kN/m² aufweist.

9. Gegenstand, der durch das Verfahren nach einem der Ansprüche 7 oder 8 vorbereitet wird.

## Revendications

1. Article comprenant :
un réseau gonflable d'une composition de silicone durcie disposé sur une surface de l'article ;
une graisse absorbée dans la composition de silicone, la graisse ayant un composant de lubrifiant fluide et un composant d'épaississant ; dans lequel le composant d'épaississant est un savon de lithium, un savon de calcium, un savon d'aluminium, un savon complexe de lithium, un savon complexe de calcium, un savon complexe d'aluminium ou une polyurée.

2. Article selon la revendication 1, dans lequel le lubrifiant fluide est un hydrocarbure ou un ester.

3. Article selon la revendication 1, dans lequel le composant d'épaississant est un benzoate stéarate d'hydroxyde d'aluminium.

4. Article selon l'une quelconque des revendications précédentes, dans lequel la quantité de graisse est d'au moins 2 % en poids sur la base du poids de la composition de silicone.

5. Article selon la revendication 1, dans lequel le lubrifiant fluide est un hydrocarbure et le composant d'épaississant est un savon complexe de lithium.

6. Article selon la revendication 1, dans lequel le lubrifiant fluide est un homopolymère de décène hydrogéné et le composant d'épaississant est du benzoate stéarate d'hydroxyde d'aluminium.

7. Procédé comprenant :
la fourniture d'un article avec un revêtement de silicone, dans lequel le revêtement de silicone comprend un réseau gonflable d'une composition de silicone durcie, et dans lequel une graisse est absorbée dans le réseau de composition de silicone pour former une surface de silicone lubrifiée ;
dans lequel la graisse a une composant de lubrifiant fluide et un composant d'épaississant, dans lequel le composant d'épaississant est un savon de lithium,
un savon de calcium, un savon d'aluminium, un savon complexe de lithium, un savon complexe de calcium, un savon complexe d'aluminium ou une polyurée ; l'exposition de la surface de silicone lubrifiée à une atmosphère formatrice de glace, dans lequel la surface lubrifiée à une adhérence de la glace inférieure à 21 kN/m².

8. Procédé selon la revendication 7, dans lequel la surface lubrifiée a une adhérence de la glace inférieure à 14 kN/m².

9. Article préparé par le procédé selon l'une ou l'autre de la revendication 7 ou de la revendication 8.
